# EUROPEAN PATENT APPLICATION

(11) **EP 3 798 884 A1**
(43) Date of publication of application: **31.03.2021**
(21) Application number: 19807644.0
(22) Date of filing: 20.05.2019
(51) Int. Cl.: G06F 21/56

(54) **MALICIOUS FILE DETECTION METHOD, APPARATUS AND DEVICE, AND COMPUTER-READABLE STORAGE MEDIUM**

(30) Priority: 23.05.2018 CN 201810503125
(71) Applicant: Sangfor Technologies Inc., Shenzhen, Guangdong 518055 (CN)
(72) Inventor: LIU, Yannan, Shenzhen, Guangdong 518055 (CN)
(74) Representative: Müller Schupfner & Partner Patent- und Rechtsanwaltspartnerschaft mbB
(86) International application number: PCT/CN2019/087565
(87) International publication number: WO 2019/223637

(57) **Abstract**

Provided are a malicious file detection method, apparatus and device, and a computer-readable storage medium. The method comprises: acquiring a file to be detected; parsing the file to be detected, and determining a binary value corresponding to the file to be detected and a high-level definition corresponding to each binary value, wherein the high-level definition is an additional attribute of the binary value; and inputting the binary value corresponding to the file to be detected and the high-level definition corresponding to each binary value into a neural network, and detecting the file to be detected by means of the neural network. It can be seen that in the present solution, when the file to be detected is detected, the binary value of the file is used, and the high-level definition corresponding to the binary value is further required to be used for comprehensive determination, thereby realizing determination of the file from multiple angles, and improving the accuracy of file detection and the effect of malicious file detection.

## Description

This application claims the priority to Chinese Patent Application No. 201810503125.4, titled "MALICIOUS FILE DETECTION METHOD, APPARATUS AND DEVICE, AND COMPUTER-READABLE STORAGE MEDIUM", filed on May 23, 2018 with the China National Intellectual Property Administration (CNIPA), which is incorporated herein by reference in its entirety.

### FIELD

The present disclosure relates to the technical field of malicious software detection, and in particular to a method, an apparatus and a device for detecting a malicious file, and a computer-readable storage medium.

### BACKGROUND

With the development of the Internet, the number of malicious software in the network has been increased rapidly, which seriously affects the normal life and work of Internet users and causes huge losses. In order to solve this problem, a malicious software detection product is developed to detect malicious software lurking in a customer system. However, an effectiveness of a rule-based or signature-based detection scheme commonly used in the industry is becoming lower and lower. On the one hand, rules and signatures can only deal with known malicious software, but for unknown attacks, such as "0day" vulnerability, such detection solutions usually has a low effectiveness. On the other hand, with the development of attacker technology, new-type malicious software has been increased rapidly, which greatly increases difficulty in extracting new rules or signatures through manually analyzing malicious samples by security experts. Currently, neural network technology provides a new direction for the malicious software detection. On the one hand, the neural network has a strong generalization ability, which can achieve good performance in an unknown sample collection by using a small number of samples for training. On the other hand, the neural network technology no longer requires a user to perform a complex feature engineering, which reduces dependence on the manual analysis of security experts.

However, in the current detection technology based on the neural network, usually a binary content of a file is directly used as a single input of the network, and the detection is performed with a general network structure. A PE file is commonly divided into dozens or even hundreds of different areas, different areas represents different information, and a semantic of a binary value in each area is different. Therefore, mixing all binary values in the file for consideration at present will lead to a low detection effect.

### SUMMARY

The purpose of the present disclosure is to provide a method, an apparatus and a device for detecting a malicious file, and a computer-readable storage medium, so as to improve the detection effect of a malicious file.

**To** achieve the above objectives, the technical solutions proposed by embodiments of the present disclosure are as follows.

A method for detecting a malicious file includes:
obtaining a to-be-detected file;
parsing the to-be-detected file, to determine binary values corresponding to the to-be-detected file and a high-level definition corresponding to each of the binary values, where the high-level definition is referred to an additional attribute of the binary value; and
inputting the binary values corresponding to the to-be-detected file and the high-level definition corresponding to each of the binary values into a neural network, and detecting the to-be-detected file by means of the neural network, where the neural network is trained with a malicious file collection in advance.

In an embodiment, the high-level definition corresponding to each of the binary values includes at least one of the following high-level definitions:
a high-level definition for representing a source of a binary value;
a high-level definition for representing a specific meaning of a binary value in an instruction; and
a high-level definition for representing a relationship of the binary value in the instruction in an execution flow.

In an embodiment, the second layer includes at least one of the following layers:
a layer for representing a source of a byte,
a layer for representing a specific meaning of a byte in an instruction,
a layer for representing a relationship of the byte in the instruction in an execution flow; and
a layer for representing a read-write permission of the byte.

In an embodiment, the layer for representing the source of the byte includes:
an instruction layer, a data layer, a PE header structure layer, and a resource section layer.

In an embodiment, the layer for representing the specific meaning of the byte in the instruction includes:
an operation code layer, an operand layer and a shift length layer.

In an embodiment, the layer for representing the relationship of the byte in the instruction in the execution flow includes:
a target instruction address layer, a function range layer, and a node range layer of a control flow chart.

In an embodiment, the parsing the to-be-detected file, to determine binary values corresponding to the to-be-detected file and a high-level definition corresponding to each of the binary values, includes:
parsing the to-be-detected file, to determine the binary values corresponding to the to-be-detected file as a first layer and to determine the high-level definition corresponding to the binary value as a second layer; and
combining the first layer and the second layer to generate a multi-layer image of the to-be-detected file , where the second layer includes at least one layer, and each layer corresponds to each type of high-level definition.

In an embodiment, the inputting the binary values corresponding to the to-be-detected file and the high-level definition corresponding to each of the binary values into a neural network, and detecting the to-be-detected file by means of the neural network includes:
reducing a dimension of the multi-layer image, to generate dimension-reduced data; and
inputting the dimension-reduced data into the neural network, and detecting the to-be-detected file by means of the neural network.

In an embodiment, the reducing a dimension of the multi-layer image to generate dimension-reduced data includes:
parsing the dimension of the multi-layer image by using an unsupervised learning network and/or a supervised learning network, to generate the dimension-reduced data.

**An** apparatus for detecting a malicious file includes:
an acquisition module, configured to obtain a to-be-detected file;
a determination module, configured to parse the to-be-detected file, to determine binary values corresponding to the to-be-detected file and a high-level definition corresponding to each of the binary values, where the high-level definition is referred to an additional attribute of the binary value; and
a detection module, configured to input the binary values corresponding to the to-be-detected file and the high-level definition corresponding to each of the binary values into a neural network, and detect the to-be-detected file by means of the neural network, where the neural network is trained with a malicious file collection in advance.

In an embodiment, the high-level definition includes at least one of the following high-level definitions:
a high-level definition for representing a source of a binary value;
a high-level definition for representing a specific meaning of a binary value in an instruction; and
a high-level definition for representing a relationship of the binary value in the instruction in an execution flow.

In an embodiment, the determination module includes:
a layer determination unit, configured to parse the to-be-detected file, to determine the binary values corresponding to the to-be-detected file as a first layer and to determine the high-level definition corresponding to each of the binary values as a second layer, where the second layer includes at least one layer, and each layer corresponds to each type of high-level definition; and
a multi-layer image determination unit, configured to combine the first layer and the second layer, to generate a multi-layer image of the to-be-detected file.

In an embodiment, the second layer includes at least one of the following layers:
a layer for representing a source of a byte,
a layer for representing a specific meaning of a byte in an instruction,
a layer for representing a relationship of the byte in the instruction in an execution flow; and
a layer for a read-write permission of the byte.

In an embodiment, the layer for representing the source of the byte includes: an instruction layer, a data layer, a PE header structure layer, and a resource section layer.

In an embodiment, the layer for representing the specific meaning of the byte in the instruction includes: an operation code layer, an operand layer, and a shift length layer.

In an embodiment, the layer for representing the relationship of the byte in the instruction in the execution flow includes: a target instruction address layer, a function range layer, and a node range layer of a control flow chart.

In an embodiment, the detection module includes:
a data dimensionality reduction unit, configured to reduce a dimension of the multi-layer image to generate dimension-reduced data; and
a file detection unit, configured to input the dimension-reduced data into the neural network, and detect the to-be-detected file by means of the neural network.

In an embodiment, the data dimensionality reduction unit is configured to reduce the dimension of the multi-layer image by using an unsupervised learning network and/or a supervised learning network, to generate the dimension-reduced data.

A device for detecting a malicious file includes:
a memory, configured to store a computer program; and
a processor, configured to, when executing the computer program, implement steps of the method for detecting a malicious file described above.

A computer-readable storage medium storing a computer program, where the computer program, when executed by a processor, implements steps of the method for detecting a malicious file described above.

It can be seen from the above schemes that, the method for detecting a malicious file according to an embodiment of the present disclosure includes: obtaining a to-be-detected file; parsing the to-be-detected file, to determine binary values corresponding to the to-be-detected file and a high-level definition corresponding to each of the binary values, where the high-level definition is referred to an additional attribute of the binary value; and inputting the binary values corresponding to the to-be-detected file and the high-level definition corresponding to each of the binary values into a neural network, and detecting the to-be-detected file by means of the neural network. In this scheme, when detecting the to-be-detected file, not only the binary values of the file are used, but also the high-level definitions corresponding to the binary values are used for comprehensive judgment, so as to realize judging the file from multiple angles, which improves an accuracy on file detection and the detection effect on malicious files. An apparatus and a device for detecting a malicious file and a computer-readable storage medium are provided in the present disclosure, and can also achieve the above technical effects.

### BRIEF DESCRIPTION OF THE DRAWINGS

In order to illustrate technical solutions in embodiments of the present disclosure or in the conventional technology more clearly, the following will briefly introduce drawings used in the description of the embodiments or the conventional technology. It is apparent that the drawings in the following description only show some embodiments of the present disclosure, and other drawings may be obtained by those ordinary skilled in the art based on these drawings without creative efforts.
Figure 1 is a schematic flow chart of a method for detecting a malicious file according to an embodiment of the present disclosure;
Figure 2 is a schematic flow chart of a method for detecting a malicious file according to an embodiment of the present disclosure;
Figure 3 is a flow chart for detecting a malicious file according to an embodiment of the present disclosure; and
Figure 4 is a schematic structural diagram of an apparatus for detecting a malicious file according to an embodiment of the present disclosure.

### DETAILED DESCRIPTION

Hereinafter, technical solutions in the embodiments of the present disclosure will be described clearly and completely in conjunction with the drawings in the embodiments of the present disclosure. It is apparent that the embodiments in the following description are only some embodiments of the present disclosure, rather than all of the embodiments. Based on the embodiment of the present disclosure, all other embodiments obtained by those skilled in the art without any creative work fall within the scope of protection of the present disclosure.

A method, an apparatus and a device for detecting a malicious file, and a computer-readable storage medium are provided in embodiments of the present disclosure, so as to improve the detection effect on the malicious file.

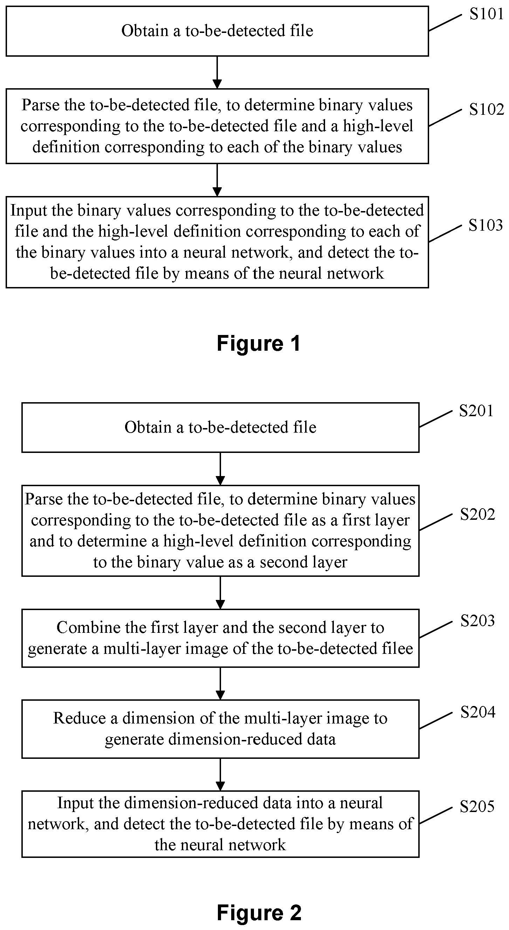

Reference is made to Figure 1, which is a method for detecting a malicious file according to an embodiment of the present disclosure. The method includes steps S101 to S103.

In step S101, a to-be-detected file is obtained.

The to-be-detected file in this scheme is a file that needs to be determined whether it is a malicious file. In the conventional technology, the to-be-detected file is determined whether the file is a malicious file only based on the file itself, that is, binary content of the to-be-detected file is directly used as a single input of a network, and the detection is performed by using a general network structure. In this way, a high-level definition of the to-be-detected file is not taken into account. In the embodiment, the high-level definition is referred to an additional attribute of each binary value, such as a shift of an instruction corresponding to the binary value, an execution authority corresponding to the binary value, a function range corresponding to the binary value. Therefore, in this scheme, when obtaining the to-be-detected file, it is to obtain not only binary values corresponding to the to-be-detected file, but also a high-level definition corresponding to each of the binary values, so as to detect the file more accurately.

In step S102, the to-be-detected file is parsed, to determine the binary values corresponding to the to-be-detected file and determine the high-level definition corresponding to each of the binary values. The high-level definition is referred to an additional attribute of the binary value.

In the step S102, it is required to parse the to-be-detected file based on knowledge of structures of known malicious files, to extract features of the to-be-detected file. The malicious file must have a different instruction sequence, data and resource from a normal file, in order to achieve a malicious function, and therefore a binary byte sequence of the malicious file is different from that of the normal file. As a result, the binary values of the to-be-detected file may be used as a detection feature to assist classification. Moreover, in this scheme, it is further required to extract the high-level definition corresponding to each of the binary values, which is used as another detection feature to assist classification.

The high-level definition of the binary value may be understood as a semantic meaning corresponding to each byte, and may also be referred as an additional attribute corresponding to each byte. The additional attribute of the to-be-detected file are extracted and used as another standard for identifying a malicious file, so that the malicious file can be detected and classified more carefully from various angles. For example, if the byte actually corresponds to a shift of an operand in an instruction, the shift variable describes a reference relationship between data, or a jump relationship between instructions. In addition, other high-level attributes, such as an execution authority corresponding to the instruction and a function range corresponding to the instruction, may also be extracted. It should be noted that there are many types of high-level definitions, thus when selecting a high-level definition, the number and types selected are not limited in this scheme, and a selection standard may be adjusted according to an actual situation.

In step S103, the binary values corresponding to the to-be-detected file and the high-level definition corresponding to each of the binary values are inputted into a neural network, and the to-be-detected file is detected by means of the neural network. The neural network is trained with a malicious file collection in advance.

Finally, after determining features of the to-be-detected file, that is, after determining the binary values of the to-be-detected file and the high-level definition corresponding to the binary value, the above features are inputted into a trained neural network for classification and detection. The trained neural network is trained with malicious files in advance. When training the neural network, original binary values of the malicious file and the high-level definition corresponding to the binary value are used for training. After training, the trained neural network is used to detect the malicious file.

In the step S103, a CNN may be used for classification to identify whether the corresponding original binary file is a malicious file. In this scheme, the CNN mainly includes a convolution layer, a max-pooling layer, a nonlinear layer and a full connected layer. In addition, a mature network structure in the industry may be used as a CNN for detection, such as an Inception-Net, a Google-Net and a Residual-Net, which is not limited herein.

It can be seen that in this solution, when detecting the to-be-detected file, not only the binary values of the file are used, but also the high-level definitions corresponding to the binary values are used for comprehensive judgment, so as to realize judging the file from multiple angles and multiple levels, which improves an accuracy on file detection and the detection effect on malicious files.

Based on the above method embodiment, in this embodiment, the parsing the to-be-detected file, to determine binary values corresponding to the to-be-detected file and a high-level definition corresponding to each of the binary values in the step S101 specifically includes:
parsing the to-be-detected file, to determine the binary values corresponding to the to-be-detected file as a first layer and to determine the high-level definition corresponding to the binary value as a second layer; and
combining the first layer and the second layer to generate a multi-layer image of the to-be-detected file, where the second layer includes at least one layer, and each layer corresponds to each type of high-level definition.

In this embodiment, when determining the binary values corresponding to the to-be-detected file and the high-level definition corresponding to each of the binary values, each type of the features may be used as an independent layer, that is, to construct a multi-layer image. Each layer of the multi-layer image represents a different attribute of each byte in a binary file, thus assisting classification through rich attribute layers.

**An** original binary value of each byte is used as an independent layer, that is, the first layer in this solution. A malicious file must have a different instruction sequence, data and resource from a normal file, so as to achieve a malicious function, and therefore a binary byte sequence of the malicious file is different from that of the normal file. As a result, the original binary value of each byte may be used as a layer feature to assist classification. Furthermore, each type of high-level definition may also be extracted and encoded as an independent layer.

It should be noted that, in this solution, the high-level definition corresponding to each of the binary values includes at least one of the following high-level definitions: a high-level definition for representing a source of a binary value, a high-level definition for representing a specific meaning of a binary value in an instruction, and a high-level definition for representing a relationship of the binary value in the instruction in an execution flow. Therefore, the second layer in this solution includes at least one of layers corresponding to the above high-level definitions. The second layer in this solution includes at least one of the following layers, and each high-level definition of each layer corresponds to a binary value in a binary layer:
1. A layer for representing a source of a byte, specifically including the following layers:
   (1) An instruction layer, indicating whether the corresponding byte is an instruction;
   (2) A data layer, indicating whether the corresponding byte is data;
   (3) A PE header structure layer, indicating whether the corresponding byte is a PE header structure; and
   (4) A resource section layer, indicating whether the corresponding byte is resource data.
2. A layer for representing a specific meaning of a byte in an instruction, specifically including the following layers:
   (1) An operation code layer, indicating whether the corresponding byte is an instruction operation code and what the operation is;
   (2) An operand layer, indicating whether the corresponding byte is an instruction operand and what the value is; and
   (3) A shift length layer, indicating whether the corresponding byte represents a jump shift and what the shift length is.
3. A layer for representing a relationship of an instruction-related byte in an execution flow, specifically including the following layers:
   (1) A target instruction address layer, indicating whether the corresponding byte belongs to a branch instruction and a location of a target instruction;
   (2) A function range layer, indicating which instruction-related bytes belong to a same function; and
   (3) A node range layer of a control flow chart, indicating which bytes belong to nodes of a same control flow chart.
4. A layer representing other feathers of a byte, for example, a read-write permission layer for a byte indicates a read-write permission of each byte.

It should be understood that in this embodiment, the first layer is a layer for original binary values of the to-be-detected file, and the second layer is a layer for the high-level definitions corresponding to the original binary values. The number of layers in the second layer is determined based on the number of types of high-level definitions selected. For example, if there are three types of high-level definitions selected, then the second layer includes a first type of layer, a second type of layer and a third type of layer.

Reference is made to Figure 2, which shows a method for detecting a malicious file according to an embodiment of the present disclosure. Steps S201 to S203 in the embodiment have been described in the above embodiment, which are not repeated herein, and steps S204 to S205 are only illustrated as follows. The method for detecting a malicious file specifically includes steps S201 to S205.

In step S201, a to-be-detected file is obtained.

In step S202, the to-be-detected file is parsed, to determine binary values corresponding to the to-be-detected file as a first layer and determine a high-level definition corresponding to the binary value as a second layer;

In step S203, the first layer and the second layer is combined to generate a multi-layer image of the to-be-detected file, where each type of high-level definition is independently served as one layer in the second layer.

In step S204, a dimension of the multi-layer image is reduced to generate dimension-reduced data.

In step S205, the dimension-reduced data is inputted into the neural network, and the to-be-detected file is detected by means of the neural network. The neural network is trained with a malicious file collection in advance.

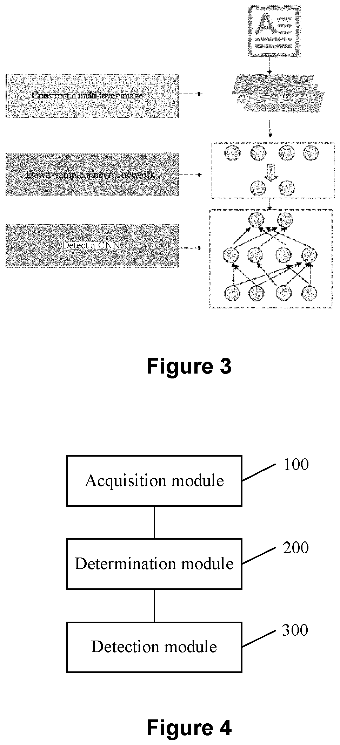

Reference is made to Figure 3, which shows a flow chart for detecting a malicious file according to an embodiment of the present disclosure. It can been seen from Figure 3 that, this solution needs three steps of constructing a multi-layer image, down-sampling a neural network and detecting a CNN (Convolutional Neural Network), to detect a malicious file. In the embodiment, it is mainly to introduce the down-sampling neural network. It should be noted that a size of a binary file is too large, and thus the binary file is not suitable to be directly used as an input of a classification network. Therefore, in the embodiment, in order to solve a problem that computational efficiency is low in processing a large file, after obtaining the multi-layer image, a dimension of the multi-layer image is required to be reduced by using the down-sampling neural network. As a result, an input size of the classification network can be reduced subsequently, thereby improving the computational efficiency. In the solution, two ways may be used to reduce the dimension of the multi-layer image. That is, in this solution, the reducing a dimension of the multi-layer image to generate dimension-reduced data specifically includes: parsing the dimension of the multi-layer image by using an unsupervised learning network and/or a supervised learning network, to generate the dimension-reduced data.

Specifically, the unsupervised learning network does not need to label data. For a given input collection, the unsupervised learning network can directly learn an effective encoding format, such as an autoencoder and variants of the autoencoder. The unsupervised learning network herein is designed based on several layer structures, such as a convolutional layer, a pooling layer and a fully connected layer. By training the unsupervised learning network, an output of the unsupervised network may directly provide dimension-reduced codes. In addition, in this solution, the supervised learning network may also be used to reduce the dimension of data. Size of high-level features of the neural network is much less than the input size, and therefore the high-level features are used as a dimension-reduced result. To this end, a CNN (Convolutional Neural Network) with a simple structure and able to receive a large-size input is trained herein. Since the main purpose of the CNN is to reduce the dimension, the convolutional layer and a variety of pooling layers are combined to form a dimension-reduced CNN.

It should be understood that in the solution, if the dimension of the multi-layer image is reduced by using the unsupervised learning network and/or the supervised learning network, the unsupervised learning network and/or the supervised learning network needs to be trained with malicious files in advance for subsequent use. It can be seen that in this solution, the dimension of the obtained multi-layer image is reduced, and then the dimension-reduced multi-layer image is inputted to the CNN for identification and detection, which can identify a complete binary file more efficiently.

**An** apparatus for detecting a malicious file according to an embodiment of the present disclosure is described as follows. For the apparatus for detecting a malicious file described hereinafter, reference may be made to the method for detecting a malicious file in the above description.

Reference is made to Figure 4, which shows an apparatus for detecting a malicious file according to an embodiment of the present disclosure. The apparatus includes an acquisition module 100, a determination module 200, and a detection module 300.

**The** acquisition module 100 is configured to obtain a to-be-detected file.

**The** determination module 200 is configured to parse the to-be-detected file, to determine binary values corresponding to the to-be-detected file and a high-level definition corresponding to each of the binary values, where the high-level definition is referred to an additional attribute of the binary value.

The detection module 300 is configured to input the binary values corresponding to the to-be-detected file and the high-level definition corresponding to each of the binary values into a neural network, and detect the to-be-detected file by means of the neural network, where the neural network is trained with a malicious file collection in advance.

The high-level definition includes at least one of the following high-level definitions: a high-level definition for representing a source of a binary value; a high-level definition for representing a specific meaning of a binary value in an instruction; and a high-level definition for representing a relationship of the binary value in the instruction in an execution flow.

The determining module includes a layer determination unit and a multi-layer image determination unit.

The layer determination unit is configure to parse the to-be-detected file, to determine the binary values corresponding to the to-be-detected file as a first layer and to determine the high-level definition corresponding to each of the binary values as a second layer, where the second layer includes at least one layer, and each layer corresponds to each type of high-level definition.

The multi-layer image determination unit is configured to combine the first layer and the second layer, to generate a multi-layer image of the to-be-detected file.

The second layer includes at least one of the following layers: a layer for representing a source of a byte; a layer for representing a specific meaning of a byte in an instruction; a layer for representing a relationship of the byte in the instruction in an execution flow; and a layer for a read-write permission of the byte.

The layer for representing the source of the byte includes: an instruction layer, a data layer, a PE header structure layer, and a resource section layer.

The layer for representing the specific meaning of the byte in the instruction includes: an operation code layer, an operand layer, and a shift length layer.

The layer for representing the relationship of the byte in the instruction in the execution flow includes: a target instruction address layer, a function range layer, and a node range layer of a control flow chart.

The detection module includes a data dimensionality reduction unit and a file detection unit.

The data dimensionality reduction unit is configured to reduce a dimension of the multi-layer image to generate dimension-reduced data.

The file detection unit is configured to input the dimension-reduced data into the neural network, and detect the to-be-detected file by means of the neural network.

The data dimensionality reduction unit is specifically configured to reduce the dimension of the multi-layer image by using an unsupervised learning network and/or a supervised learning network, to generate the dimension-reduced data.

A device for detecting a malicious file is provided in an embodiment of the present disclosure. The device includes a memory and a processor. The memory is configured to store a computer program. The processor is configured to, when executing the computer program, implement steps of the methods for detecting a malicious file described above.

A computer-readable storage medium is further provided in an embodiment of the present disclosure. The computer-readable storage medium is configured to store a computer program. The computer program is executed by a processor to implement steps of the method for detecting a malicious file described above.

Specifically, the storage medium may include a medium that may store a program code, such as a U disk, a removable hard disk, a read-only memory (ROM), a random access memory (RAM), a disk or an optical disk.

In view of the above, a method, an apparatus and a device for detecting a malicious file, and a computer-readable storage medium are provided in the present disclosure. When detecting the to-be-detected file, not only the binary values of the file are used, but also the high-level definitions corresponding to the binary values are used for comprehensive judgment, so as to realize judging the file from multiple angles, which improves an accuracy on file detection and the detection effect on malicious files. In addition, after obtaining the multi-layer image including the binary values and the corresponding high-level definitions, the dimension of the multi-layer image is reduced by means of the neural network, thereby improving the detection efficiency.

The embodiments in the specification are described in a progressive way, and each embodiment lays emphasis on differences from other embodiments. For the same or similar parts between various embodiments, reference may be made to each other.

According to the above description of the disclosed embodiments, those skilled in the art may implement or practice the present disclosure. Many modifications to these embodiments are apparent for those skilled in the art, and general principles defined herein may be implemented in other embodiments without departing from the spirit or scope of the present disclosure. Hence, the present disclosure is not limited to the embodiments disclosed herein, but is to conform to the widest scope in accordance with the principle and novel features disclosed herein.

## Claims

1. A method for detecting a malicious file, comprising:
obtaining a to-be-detected file;
parsing the to-be-detected file, to determine binary values corresponding to the to-be-detected file and a high-level definition corresponding to each of the binary values, wherein the high-level definition is referred to an additional attribute of the binary value; and
inputting the binary values corresponding to the to-be-detected file and the high-level definition corresponding to each of the binary values into a neural network, and detecting the to-be-detected file by means of the neural network, wherein the neural network is trained with a malicious file collection in advance.

2. The method for detecting a malicious file according to claim 1, wherein the high-level definition corresponding to each of the binary values comprises at least one of the following high-level definitions:
a high-level definition for representing a source of a binary value;
a high-level definition for representing a specific meaning of a binary value in an instruction; and
a high-level definition for representing a relationship of the binary value in the instruction in an execution flow.

3. The method for detecting a malicious file according to claim 1, wherein the parsing the to-be-detected file, to determine binary values corresponding to the to-be-detected file and a high-level definition corresponding to each of the binary values, comprises:
parsing the to-be-detected file, to determine the binary values corresponding to the to-be-detected file as a first layer and to determine the high-level definition corresponding to the binary value as a second layer; and
combining the first layer and the second layer to generate a multi-layer image of the to-be-detected file, wherein the second layer comprises at least one layer, and each layer corresponds to each type of high-level definition.

4. The method for detecting a malicious file according to claim 3, wherein the second layer comprises at least one of the following layers:
a layer for representing a source of a byte;
a layer for representing a specific meaning of a byte in an instruction;
a layer for representing a relationship of the byte in the instruction in an execution flow; and
a layer for representing a read-write permission of the byte.

5. The method for detecting a malicious file according to claim 4, wherein the layer for representing the source of the byte comprises:
an instruction layer, a data layer, a PE header structure layer, and a resource section layer.

6. The method for detecting a malicious file according to claim 4, wherein the layer for representing the specific meaning of the byte in the instruction comprises:
an operation code layer, an operand layer and a shift length layer.

7. The method for detecting a malicious file according to claim 4, wherein the layer for representing the relationship of the byte in the instruction in the execution flow comprises:
a target instruction address layer, a function range layer, and a node range layer of a control flow chart.

8. The method for detecting a malicious file according to claim 3, wherein the inputting the binary values corresponding to the to-be-detected file and the high-level definition corresponding to each of the binary values into a neural network, and detecting the to-be-detected file by means of the neural network comprises:
reducing a dimension of the multi-layer image, to generate dimension-reduced data; and
inputting the dimension-reduced data into the neural network, and detecting the to-be-detected file by means of the neural network.

9. The method for detecting a malicious file according to claim 8, wherein the reducing a dimension of the multi-layer image to generate dimension-reduced data comprises:
reducing the dimension of the multi-layer image by using an unsupervised learning network and/or a supervised learning network, to generate the dimension-reduced data.

10. An apparatus for detecting a malicious file comprising:
an acquisition module, configured to obtain a to-be-detected file;
a determination module, configured to parse the to-be-detected file, to determine binary values corresponding to the to-be-detected file and a high-level definition corresponding to each of the binary values, wherein the high-level definition is referred to an additional attribute of the binary value; and
a detection module, configured to input the binary values corresponding to the to-be-detected file and the high-level definition corresponding to each of the binary values into a neural network, and detect the to-be-detected file by means of the neural network, wherein the neural network is trained with a malicious file collection in advance.

11. The apparatus for detecting a malicious file according to claim 10, wherein the high-level definition comprises at least one of the following high-level definitions:
a high-level definition for representing a source of a binary value;
a high-level definition for representing a specific meaning of a binary value in an instruction; and
a high-level definition for representing a relationship of the binary value in the instruction in an execution flow.

12. The apparatus for detecting a malicious file according to claim 10, wherein the determination module comprises:
a layer determination unit, configured to parse the to-be-detected file, to determine the binary values corresponding to the to-be-detected file as a first layer and to determine the high-level definition corresponding to the binary values as a second layer, wherein the second layer comprises at least one layer, and each layer corresponds to each type of high-level definition; and
a multi-layer image determination unit, configured to combine the first layer and the second layer, to generate a multi-layer image of the to-be-detected file.

13. The apparatus for detecting a malicious file according to claim 12, wherein the second layer comprises at least one of the following layers:
a layer for representing a source of a byte;
a layer for representing a specific meaning of a byte in an instruction;
a layer for representing a relationship of the byte in the instruction in an execution flow; and
a layer for a read-write permission of the byte.

14. The apparatus for detecting a malicious file according to claim 13, wherein the layer for representing the source of the byte comprises: an instruction layer, a data layer, a PE header structure layer, and a resource section layer.

15. The apparatus for detecting a malicious file according to claim 13, wherein the layer for representing the specific meaning of the byte in the instruction comprises: an operation code layer, an operand layer, and a shift length layer.

16. The apparatus for detecting a malicious file according to claim 13, wherein the layer for representing the relationship of the byte in the instruction in the execution flow comprises: a target instruction address layer, a function range layer, and a node range layer of a control flow chart.

17. The apparatus for detecting a malicious file according to claim 12, wherein the detection module comprises:
a data dimensionality reduction unit, configured to reduce a dimension of the multi-layer image to generate dimension-reduced data; and
a file detection unit, configured to input the dimension-reduced data into the neural network, and detect the to-be-detected file by means of the neural network.

18. The apparatus for detecting a malicious file according to claim 17, wherein the data dimensionality reduction unit is configured to reduce the dimension of the multi-layer image by using an unsupervised learning network and/or a supervised learning network, to generate the dimension-reduced data.

19. A device for detecting a malicious file, comprising:
a memory, configured to store a computer program; and
a processor, configured to, when executing the computer program, implement steps of the method for detecting a malicious file according to any one of claims 1 to 9.

20. A computer-readable storage medium storing a computer program, wherein the computer program, when executed by a processor, implements steps of the method for detecting a malicious file according to any one of claims 1 to 9.
